# EUROPÄISCHE PATENTSCHRIFT

(11) **EP 2 116 794 B1**
(45) Veröffentlichungstag und Bekanntmachung des Hinweises auf die Patenterteilung: **16.08.2017**
(21) Anmeldenummer: 09005193.9
(22) Anmeldetag: 09.04.2009
(51) Int. Cl.: H02S 20/24, F24J 2/52

(54) **Vorrichtung zum Umwandeln von Sonnenlicht**
Device for converting sunlight
Dispositif de transformation de la lumière solaire

(30) Priorität: 09.05.2008 DE 102008023063
(43) Veröffentlichungstag der Anmeldung: 11.11.2009
(73) Patentinhaber: TRAtec-Solar GmbH, 79336 Herbolzheim (DE)
(72) Erfinder: Enderlin, Rolf, 79356 Eichstetten (DE); Wicklein, Ralf, 79356 Eichstetten (DE)
(74) Vertreter: Kunst, Manuel Nikolaus Johannes

(56) Entgegenhaltungen:
- WO-A1-02/073703
- DE-A1-102005 023 971
- DE-U1-202005 003 750
- DE-U1-202005 015 128
- DE-U1-202006 019 837
- DE-U1-202007 005 745
- DE-U1-202007 012 570

## Beschreibung

Die Erfindung betrifft eine Vorrichtung zum Umwandeln von Sonnenlicht in elektrischen Strom mit einer Halteeinrichtung mit wenigstens einem das Sonnenlicht auffangenden und in elektrischen Strom umwandelnden Solarmodul, welche Vorrichtung auf einem im wesentlichen flachen der gering geneigten Dach anbringbar ist, wobei an der Vorrichtung auf eine Tragkonstruktion des Dachs direkt oder indirekt aufsetzbare Stützen vorgesehen sind, auf welchen als Halteeinrichtung mit der der Neigung des wenigstens einen Solarmoduls entsprechenden Neigung ein Profilelement angeordnet ist, dessen Profilierung in Spannrichtung von Stütze zu Stütze verläuft.

Aus der DE 20 2006 019 837 U1 ist eine Tragkonstruktionsvorrichtung für Solaranlagen auf Flachdächern und dadurch eine Vorrichtung der vorstehend genannten Art bekannt. Als Profilelement sind dabei einzelne Querträger vorgesehen.

Aus der DE 20 2007 012 570 U1 ist eine Unterkonstruktion für Solarfreiflächenanlagen bekannt, die also nicht zum Aufsetzen auf eine Dachkonstruktion dient. An vertikalen Pfosten sind schräge Träger vorgesehen, die durch querverlaufende einzelne Profilelemente verbunden sind, worauf die Solarmodule befestigt werden.

Eine vergleichbare Vorrichtung ist auch aus der DE 10 2006 028 494 A1 bekannt, welche eine Vorrichtung offenbart, bei welcher Solarmodule an Winkelprofilen auf einem Dach gehalten sind. Problematisch ist in vielen Fällen, dass durch die Solarmodule der Zugang zum Dach selbst erheblich erschwert ist, so dass eventuell erforderliche Dachreparaturen, die gerade auch bei Flachdächern immer wieder erforderlich werden, schwierig sind.

Ferner ist bei den bisherigen Konstruktionen ungünstig, dass die durch die Vorrichtung entstehende Last die Dachfläche zusätzlich belastet.

Überdies müssen bei direkter Anbringung an Winkelprofilen diese entsprechend stabil ausgebildet sein, um die erwähnte Last sicher und zuverlässig und sicher tragen zu können.

Es besteht deshalb die Aufgabe, eine derartige Vorrichtung in stabiler Ausführung zu schaffen, bei welcher die durch die Vorrichtung auftretenden Lastkräfte von dem Dach selbst ferngehalten werden und zwischen dem Solarmodul und der Dachoberseite genügend Platz für Wartungspersonal besteht. Gleichzeitig soll es möglich sein, die elektrischen Zuleitungen der Solarmodule, die sogenannten Solarkabel, gut geschützt unterzubringen.

Diese Aufgabe wird mit den Mitteln und Merkmalen des Patentanspruchs 1 gelöst. Insbesondere ist vorgesehen, dass an der Oberseite des Profilelements ein dessen Schrägung folgender Halter angeordnet ist, an dessen tiefster Stelle ein Halteelement zur Festlegung des wenigstens einen Solarmoduls vorgesehen ist, dass das Profilelement als offenes Hohlprofil mit trapez- oder wellenförmigem Querschnitt ausgebildet ist und dass die Profilierungen des Profilelements zu dem Solarmodul hin offen sind.

Mit Hilfe der Stützen wird die Last in die Tragekonstruktion des Dachs, die beispielsweise auch eine Betondecke sein kann, eingeleitet und vom Dach selbst ferngehalten. Gleichzeitig verleiht das zwischen den Stützen und dem wenigstens einen Solarmodul angeordnete Profilelement der Vorrichtung genügend Stabilität, um das Modul in der vorbestimmten Position und mit der betreffenden Neigung sicher zu halten. Unter Solarmodulen sollen im Kontext dieser Anmeldung sowohl Photovoltaikals auch Solarthermie-Module verstanden werden.

Durch die Ausbildung des Profilelements als offenes Hohlprofil mit trapez- oder wellenförmigem Querschnitt ergibt sich eine einfache und kostengünstig herzustellende Vorrichtung mit einer stabilen Abstützung des Solarmoduls.

Besonders vorteilhaft ist es dabei, wenn die zu dem Solarmodul hin offenen Profilierungen des im Querschnitt trapez- oder wellenförmigen Profilelements von dem oder den Solarmodulen nach oben abgeschlossen sind. Dadurch ergibt sich die Möglichkeit, die Kabel geschützt unterzubringen.

Eine besonders einfach zu realisierende Festlegung der Solarmodule lässt sich bei einer Weiterbildung der Vorrichtung erreichen, bei welcher das Haltelement des Halters zum Umgreifen des unteren Randes des schräg angeordneten Solarmoduls insbesondere als rinnen- oder nutförmige Verformung vorgesehen ist. Der mindestens eine Halter, insbesondere aber mehrer Halter können hierbei beispielsweise an einer dem oder den Solarmodulen zugewandten Linie oder Fläche des Profilelements, die sich quer zur Spannrichtung des Profilelements erstreckt, abgestützt aufliegen.

Mit dem an dem Profilelement befindlichen Halter, insbesondere mit dem den unteren Rand des Solarmoduls umgreifenden Halteelement, kann das jeweilige Solarmodul bereits bei der Montage gesichert werden, so dass es nicht abrutschen kann und nicht zusätzliche Arbeitskräfte benötigt werden, dieses Abrutschen während der Montage zu verhindern. Darüber hinaus kann dieser Halter auch im Laufe der Zeit Wärmedehnungen oder Beschädigungen oder Lösungen der eigentlichen Befestigungen ausgleichen. Durch die zusätzliche Abstützung mit Hilfe des Halters können auch die sonstigen Befestigungsmittel schwächer und damit preiswerter gestaltet werden. Überdies ist auch der Austausch eventuell defekter oder aus anderen Gründen zu wechselnder Module stark vereinfacht.

Zweckmäßigerweise können in den zu dem Solarmodul hin offenen Profilierungen des Profilelements elektrische Zuleitungen des Solarmoduls geführt sein, da diese Profilierungen Platz für elektrische Zuleitungen des Solarmoduls bieten und von dem oder den Solarmodulen nach oben abgeschlossen und die Kabel derart geschützt sind. Gegebenfalls kann dabei in den betreffenden Profilierungen die Anordnung von Befestigungselementen zur weiteren Festlegung und/oder Führung der Kabel vorgesehen sein.

Für eine gute Hinterlüftung und darüber hinaus auch für Zugänglichkeit des Daches ist es vorteilhaft, wenn bei einer zweckmäßigen Weiterbildung der Vorrichtung in Schrägungsrichtung des Profilelements jeweils zwei Stützen paarweise vorgesehen sind und die entsprechenden Stützenpaare in Spannrichtung nebeneinander von dem Profilelement überbrückt angeordnet sind.

Um trotz gegebenenfalls gleicher Länge der Stützen eines Stützenpaares das Solarmodul und das unterstützende Profilelement in gewünschter Schrägung auf dem Dach anordnen zu können, kann es vorgesehen sein, dass zwischen einem Stützenpaar und dem Profilelement ein dreiecks- oder trapezförmiges Stützmittel, etwa ein derart geformtes Blech, angeordnet ist.

Eine vorteilhafte Lasteinleitung in die Dachkonstruktion wird bei einer Weiterbildung der Vorrichtung dadurch erreicht, dass eine oder mehrere Stützen an einer Grundplatte befestigt sind, die auf der Tragekonstruktion des Dachs in Gebrauchsstellung zumindest bereichsweise aufliegt und gehalten ist.

Bei einer anderen Ausführung der erfindungsgemäßen Vorrichtung können eine oder mehrere Stützen an ihrem dem Solarmodul abgewandten Ende eine der Struktur des Dachs angepasste Aufständerung aufweisen, um derart unterschiedliche Gestaltungen des Dachs zu gestatten oder Unebenheiten auszugleichen.

Eine sichere Aufstellung und Montage sowie eine weitgehend gefahrlose Instandhaltung der Vorrichtung wird bei einer Weiterbildung der Vorrichtung von gegebenenfalls eigenständiger erfinderischer Bedeutung erreicht, indem in ihrem Bereich wenigstens eine Halte- und/oder Sicherungseinrichtung vorgesehen ist, die eine mit Arbeiten an der Vorrichtung betraute Person zu sichern in der Lage ist.

Eine solche Halte- und/oder Sicherungseinrichtung kann zweckmäßigerweise als Anschlagspunkt, beispielsweise als Öse oder als Durchgriff durch die Vorrichtungsstruktur, vorgesehen sein. Die Öse oder der Durchgriff kann dabei in im Grunde beliebiger Weise an der Vorrichtung, beispielsweise an dem Stützmittel oder einer Stütze selbst, angeordnet und etwa zum Durchfädeln eines Sicherungsseils vorgesehen sein.

Besonders vorteilhaft lässt sich die Vorrichtung an im wesentlichen flachen oder gering geneigten Dächern anordnen, bei welchen die Neigung der Dachfläche des Dachs in etwa 5° oder weniger beträgt.

Die Erfindung wird nachstehend anhand von Ausführungsbeispielen in den Figuren der Zeichnung näher erläutert. Es zeigen hierbei, teilweise in stark schematisierter Darstellung, die
- Fig.1: eine ebene Seitenansicht einer ersten Ausführungsform der Vorrichtung mit an der Tragekonstruktion des Dachs angeordneten Stützen, dem Profilelement und dem Halter mit Halteelement sowie mit einem Solarmodul;
- Fig.2: eine perspektivische Seitenansicht von schräg oben einer weiteren Ausführungsform der Vorrichtung ohne Solarmodul mit aufgeständerten Stützen, Profilelement und Halter mit Halteelement;
- Fig.3: eine perspektivische Seitenansicht der Vorrichtung aus der Fig.2 von schräg unten mit mehreren Paaren nebeneinander liegender Stützen in Spannrichtung;
- Fig.4: eine perspektivische Ansicht der Vorrichtung aus den Fig. 2 und 3 auf deren Längsseite von schräg oben.

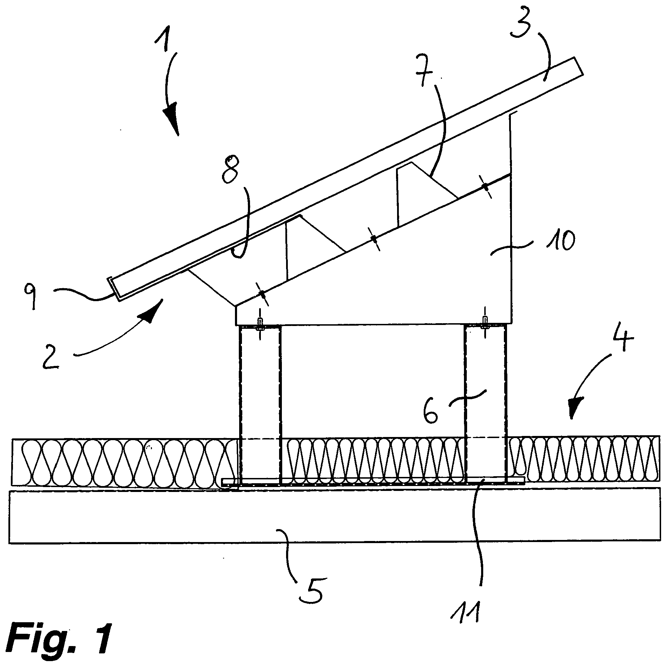

In der Fig.1 ist eine im Ganzen mit 1 bezeichnete Vorrichtung zum Umwandeln von Sonnenlicht in elektrischen Strom zu erkennen, die eine Halteeinrichtung 2 für wenigstens ein das Sonnenlicht auffangendes und in elektrischen Strom umwandelndes Solarmodul 3 aufweist und die an einem im wesentlichen flachen Dach 4 angebracht ist. An der Vorrichtung 1 befinden sich auf eine Tragekonstruktion 5 des Dachs 4 direkt aufgesetzte Stützen 6, auf welchen als Halteeinrichtung 2 mit der der Neigung des wenigstens einen Solarmoduls 3 entsprechenden Neigung ein Profilelement 7 angeordnet ist, dessen Profilierung in Spannrichtung von Stütze 6 zu Stütze 6 verläuft. Außerdem zeigt die Fig.1, dass an der Oberseite des Profilelements 7 ein dessen Schrägung folgender Halter 8 angeordnet ist, an dessen tiefster Stelle sich ein Halteelement 9 zur Festlegung des wenigstens einen Solarmoduls 3 befindet.

Weiter ist zu erkennen, dass das Profilelement 7 als offenes Hohlprofil mit trapezförmigem Querschnitt ausgebildet ist, deren dem Solarmodul 3 zugewandte, offene Profilierungen Platz zur Führung von nicht dargestellten elektrischen Zuleitungen für das Modul bieten.

Ebenfalls ist in der Fig.1 zu erkennen, dass der Halter 8 der Halteeinrichtung 2, mit seinem dem Halteelement 9 abgewandten Ende das unterste vollständige, nach oben geschlossene Trapez des Profilelements 7 so übergreift, dass dieses Ende auf dessen dem Solarmodul 3 zugewandter Fläche zu liegen kommt und durch eine der Trapezform folgende Formgebung gegen Abrutschen von dem Profilelement gesichert ist. An dem anderen Ende des Halters 8 ist das Halteelement 9 angeordnet, das zum Umgreifen des unteren Randes des schräg angeordneten Solarmoduls 3 als rinnenförmige Verformung ausgebildet ist.

Ferner zeigt die Fig.1, dass in Schrägungsrichtung des Profilelements 7 jeweils zwei Stützen 6 paarweise angeordnet sind und die entsprechenden Stützenpaare in Spannrichtung nebeneinander von dem Profilelement 7 überbrückt angeordnet sind. Um die gewünschte Neigung des Solarmoduls 3 zu erreichen ist zwischen einem Stützenpaar und dem Profilelement 7 ein dreiecksförmiges Stützmittel 10, welches als Stützblech ausgebildet ist, angeordnet. Diese Neigung wäre bei einer anderen Ausführung auch durch unterschiedlich hohe Stützen 6 erzielbar. Diese Stützblech 10 ist sowohl mit den Stützen6 als auch mit dem Profilelement 7 durch geeignete Verbindungsmittel, hier Niet- und Schraubverbindungen, verbunden. Schließlich ist das Stützenpaar in der Fig.1 auch an einer Grundplatte 11 befestigt, die auf der Tragekonstruktion 5 des Dachs 4 in Gebrauchsstellung aufliegt und gehalten ist.

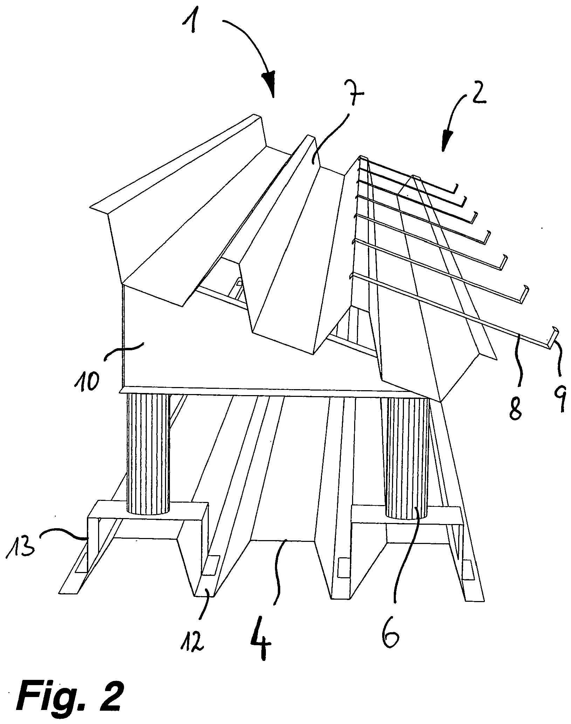

Die Fig.2 zeigt eine andere Ausführungsform der Vorrichtung 1 in perspektivischer Ansicht, bei welcher aus Gründen der Übersichtlichkeit auf eine Darstellung der an der Vorrichtung anzuordnenden Solarmodule 3 verzichtet wurde. Dabei ist die bereits beschriebene Auflage des dem Halteelement 9 abgewandten Ende des Halters 8 auf dem Profilelement 7 gut zu erkennen. In Längserstreckung der Vorrichtung sind dabei eine Anzahl von Haltern 8 gleichmäßig beabstandet an dem Profilelement angeordnet.

Ebenso erkennt man in der Fig.2 die Abstützung des Profilelements 7 auf dem Stützblech 10 sowie dessen Abstützung an den Stützen 6. Diese Stützen 6 weisen an ihrem dem nicht dargestellten Solarmodul 3 abgewandten Ende eine der Struktur des Dachs 4 angepasste Aufständerung auf, die vorliegend als Ständer 13 für jede Stütze 6 ausgebildet ist. In der Fig.2 ist auch das Dach 4 als Profil ausgebildet, wobei der Profilboden des offenen Profils des Dachs 4 dabei auf der nicht weiter dargestellten Tragkonstruktion 5 des Dachs 4 aufliegt. In den Profilböden 12 stützen sich wiederum die Ständer 13 der Stützen 6 ab.

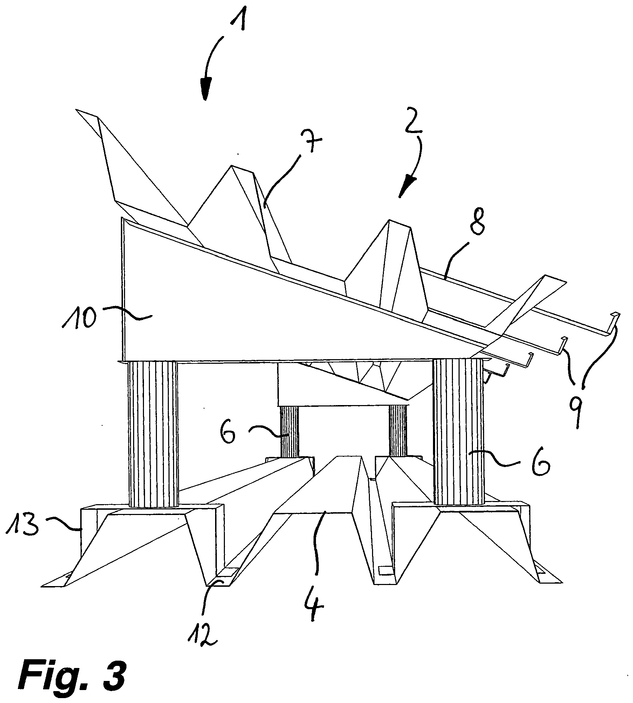

Die Fig.3 zeigt die Vorrichtung 1 der Fig.2 in einer anderen Perspektive, nämlich schräg von unten, wodurch die Abstützung durch ein weiteres, von dem ersten in Längsersteckung der Vorrichtung 1 beabstandet angeordnetes Paar von Stützen 6 ersichtlich ist. Ansonsten entspricht die Darstellung derjenigen aus der Fig.2.

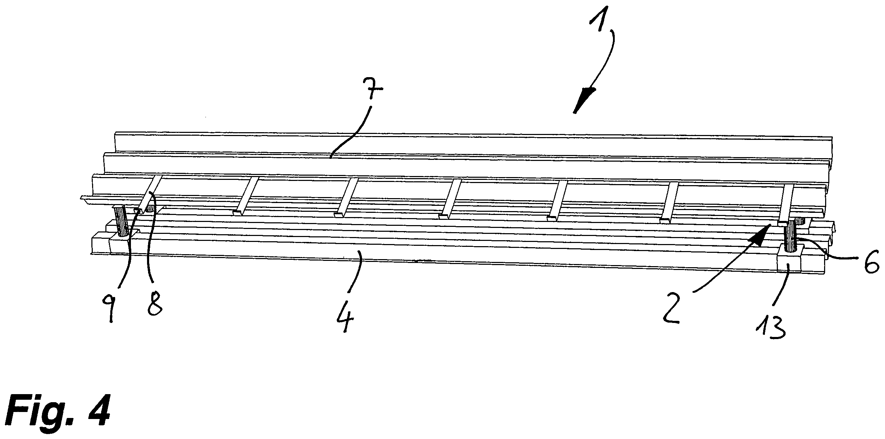

In der Fig.4 ist die Vorrichtung 1 zur Verdeutlichung der oben erwähnten Längserstreckung in einer perspektivischen Ansicht dargestellt, die ihre Erstreckung zwischen zwei auf dem profilierten Dach 4 an Ständern 13 angeordneten Paaren von Stützen 6 zeigt. Ansonsten entspricht die Ausführung den Fign. 2 und 3, wie dort wurde auf eine Darstellung der an der Halteeinrichtung 2 gehaltenen Solarmodule 3 verzichtet.

Demnach betrifft die vorstehende Erfindung also eine Vorrichtung 1 zum Umwandeln von Sonnenlicht in elektrischen Strom mit einer Halteeinrichtung 2 für wenigstens ein das Sonnenlicht auffangendes und in elektrischen Strom umwandelndes Solarmodul 3, welche Vorrichtung 1 auf einem im wesentlichen flachen oder gering geneigten Dach 4 anbringbar ist. Um eine derartige Vorrichtung 1 in stabiler Ausführung zur Verfügung zu haben, bei welcher die durch die Vorrichtung 1 auftretenden Lastkräfte von dem Dach 4 selbst ferngehalten werden und zwischen dem Solarmodul 3 und der Dachoberseite genügend Platz für Wartungspersonal besteht und gleichzeitig die elektrischen Zuleitungen der Solarmodule 3, gut geschützt untergebracht sind, sind an der Vorrichtung 1 auf eine Tragekonstruktion 5 des Dachs 4 direkt oder indirekt aufsetzbare Stützen 6 vorgesehen, auf welchen als Halteeinrichtung 2 mit der der Neigung des wenigstens einen Solarmoduls 3 entsprechenden Neigung ein Profilelement 7 angeordnet ist, dessen Profilierung in Spannrichtung von Stütze zu Stütze verläuft, und an der Oberseite des Profilelements 7 ist ein dessen Schrägung folgender Halter 8 angeordnet, an dessen tiefster Stelle ein Halteelement 9 zur Festlegung des wenigstens einen Solarmoduls 3 vorgesehen ist.

## Patentansprüche

1. Vorrichtung (1) zum Umwandeln von Sonnenlicht in elektrischen Strom mit einer Halteeinrichtung (2) mit einem das Sonnenlicht auffangenden und in elektrischen Strom umwandelnden Solarmodul (3), welche Vorrichtung auf einem im wesentlichen flachen oder gering geneigten Dach (4) anbringbar ist, wobei an der Vorrichtung (1) auf eine Tragekonstruktion (5) des Dachs (4) direkt oder indirekt aufsetzbare Stützen (6) vorgesehen sind, auf welchen als Halteeinrichtung (2) mit der der Neigung des wenigstens einen Solarmoduls (3) entsprechenden Neigung ein Profilelement (7) angeordnet ist, dessen Profilierung in Spannrichtung von Stütze zu Stütze verläuft, **dadurch gekennzeichnet, dass** an der Oberseite des Profilelements (7) ein dessen Schrägung folgender Halter (8) angeordnet ist, an dessen tiefster Stelle ein Halteelement (9) zur Festlegung des wenigstens einen Solarmoduls (3) vorgesehen ist, dass das Profilelement (7) als offenes Hohlprofil mit trapez- oder wellenförmigem Querschnitt ausgebildet ist und dass die Profilierungen des Profilelements (7) zu dem Solarmodul (3) hin offen sind.

2. Vorrichtung nach Anspruch 1, **dadurch gekennzeichnet, dass** die zu dem Solarmodul (3) hin offenen Profilierungen des im Querschnitt trapez- oder wellenförmigen Profilelements (7) von dem oder den Solarmodulen (3) nach oben abgeschlossen sind.

3. Vorrichtung nach Anspruch 1, **dadurch gekennzeichnet, dass** das Haltelement (9) des Halters (8) zum Umgreifen des unteren Randes des schräg angeordneten Solarmoduls (3) insbesondere als rinnen- oder nutförmige Verformung vorgesehen ist.

4. Vorrichtung nach Anspruch 1 bis 3, **dadurch gekennzeichnet, dass** in den zu dem Solarmodul (3) hin offenen Profilierungen des Profilelements (7) Platz für elektrische Zuleitungen des Solarmoduls (3) ist und/oder elektrische Zuleitungen des Solarmoduls (3) angeordnet und geführt sind.

5. Vorrichtung nach einem der Ansprüche 1 bis 3, **dadurch gekennzeichnet, dass** in Schrägungsrichtung des Profilelements (3) jeweils zwei Stützen (6) paarweise vorgesehen sind und die entsprechenden Stützenpaare in Spannrichtung nebeneinander von dem Profilelement (7) überbrückt angeordnet sind.

6. Vorrichtung nach einem der vorhergehenden Ansprüche, **dadurch gekennzeichnet, dass** zwischen einer Stütze (6) oder einem Stützenpaar und dem Profilelement (7) ein dreiecks- oder trapezförmiges Stützmittel (10), insbesondere ein Stützblech, angeordnet ist.

7. Vorrichtung nach einem der vorhergehenden Ansprüche, **dadurch gekennzeichnet, dass** eine oder mehrere Stützen (6) an einer Grundplatte (11) befestigt sind, die auf der Tragekonstruktion (5) des Dachs (4) in Gebrauchsstellung zumindest bereichsweise aufliegt und gehalten ist.

8. Vorrichtung nach einem der vorhergehenden Ansprüche, **dadurch gekennzeichnet, dass** eine oder mehrere Stützen (6) an ihrem dem Solarmodul (3) abgewandten Ende eine der Struktur des Dachs (4) angepasste Aufständerung aufweisen.

9. Vorrichtung nach einem der vorhergehenden Ansprüche, **dadurch gekennzeichnet, dass** in ihrem Bereich wenigstens eine Halte- und/oder Sicherungseinrichtung vorgesehen ist.

10. Vorrichtung nach Anspruch 9, **dadurch gekennzeichnet, dass** die Sicherungseinrichtung als Anschlagspunkt, beispielsweise als Öse oder als Durchgriff durch die Vorrichtungsstruktur, vorgesehen ist.

11. Vorrichtung nach einem der vorhergehenden Ansprüche, **dadurch gekennzeichnet, dass** die Neigung der Dachfläche des Dachs kleiner gleich 5° vorgesehnen ist.

## Claims

1. Apparatus (1) for converting sunlight into electrical current, comprising a holding device (2) having a solar module (3) which captures the sunlight and converts it into electrical current, which apparatus can be mounted on a substantially flat or slightly pitched roof (4), wherein the apparatus (1) has supports (6) provided thereon which can be placed directly or indirectly onto a support structure (5) of the roof (4) and on which a profile element (7) is arranged as a holding device (2) at the inclination corresponding to the inclination of the at least one solar module (3), the profiling of said profile element extending from support to support in the clamping direction, **characterised in that** arranged on the upper side of the profile element (7) is a holder (8) which follows the cant of said profile element, a holding element (9) for fixing the at least one solar module (3) being provided at the lowest point of said holder, **in that** the profile element (7) is designed as an open hollow profile having a trapezoidal or undulating cross-section and **in that** the profilings of the profile element (7) are open towards the solar module (3).

2. Apparatus as claimed in claim 1, **characterised in that** the profilings, which are open towards the solar module (3), of the profile element (7) which has a trapezoidal or undulating cross-section are terminated at the top by the solar module(s).

3. Apparatus as claimed in claim 1, **characterised in that** the holding element (9) of the holder (8) is provided for engaging around the lower edge of the obliquely arranged solar module (3) in particular as a channel-shaped or groove-shaped deformation.

4. Apparatus as claimed in claims 1 to 3, **characterised in that** in the profilings of the profile element (7) which are open towards the solar module (3) space is provided for electrical supply lines of the solar module (3) and/or electrical supply lines of the solar module (3) are arranged and guided therein.

5. Apparatus as claimed in any one of claims 1 to 3, **characterised in that** in the direction of cant of the profile element (3) in each case two supports (6) are provided in pairs and the corresponding pairs of supports are arranged next to one another in the clamping direction in a manner bridged by the profile element (7).

6. Apparatus as claimed in any one of the preceding claims, **characterised in that** a triangular or trapezoidal support means (10), in particular a support plate, is arranged between a support (6) or a pair of supports and the profile element (7).

7. Apparatus as claimed in any one of the preceding claims, **characterised in that** one or a plurality of supports (6) are fastened to a base plate (11) which lies and is held at least in regions on the support structure (5) of the roof (4) in the usage position.

8. Apparatus as claimed in any one of the preceding claims, **characterised in that** one or a plurality of supports (6) has, at its end facing away from the solar module (3), an elevated support which is adapted to the structure of the roof (4).

9. Apparatus as claimed in any one of the preceding claims, **characterised in that** at least one holding and/or securing device is provided in the region of said apparatus.

10. Apparatus as claimed in claim 9, **characterised in that** the securing device is provided as a stop point, e.g. as an eyelet or as a reach-through through the apparatus structure.

11. Apparatus as claimed in any one of the preceding claims, **characterised in that** the roof surface of the roof has a pitch of less than or equal to 5°.

## Revendications

1. Dispositif (1) pour la conversion de lumière solaire en courant électrique avec un système de support (2) équipé d'un module solaire (3) captant la lumière solaire et la convertissant en courant électrique, dispositif qui peut être installé sur un toit essentiellement plat ou légèrement incliné (4), dans lequel il est prévu sur le dispositif des soutiens (6) à poser directement ou indirectement sur une structure portante (5) du toit (4), sur lesquels un élément profilé (7) est disposé en tant que système de support (2) avec l'inclinaison correspondant à l'inclinaison dudit au moins un module solaire (3) et dont le profilage s'étend de soutien en soutien dans la direction de la travée, **caractérisé en ce qu'**un support (8) ayant la même inclinaison est disposé sur le côté supérieur de l'élément profilé (7) et il est prévu à son point le plus bas un élément de retenue (9) pour la fixation dudit au moins un module solaire (3), **en ce que** l'élément profilé (7) est réalisé en forme de profilé creux ouvert avec une section transversale trapézoïdale ou ondulée et **en ce que** les profilages de l'élément profilé (7) sont ouverts en direction du module solaire (3).

2. Dispositif selon la revendication 1, **caractérisé en ce que** les profilés ouverts en direction du module solaire (3) de l'élément profilé (7) de section transversale trapézoïdale ou ondulée sont fermés vers le haut par le ou les module(s) solaire(s) (3).

3. Dispositif selon la revendication 1, **caractérisé en ce que** l'élément de retenue (9) du support (8) est prévu pour accrocher le bord inférieur du module solaire (3) disposé en oblique, en particulier avec un façonnage en forme de goulotte ou de rainure.

4. Dispositif selon une revendication 1 à 3, **caractérisé en ce qu'**il y a dans les profilages de l'élément profilé (7) ouverts en direction du module solaire (3) de la place pour des lignes d'alimentation électrique du module solaire (3) et/ou des lignes d'alimentation électrique du module solaire (3) y sont disposées et guidées.

5. Dispositif selon l'une quelconque des revendications 1 à 3, **caractérisé en ce qu'**il est prévu dans la direction oblique de l'élément profilé (3) chaque fois deux soutiens (6) par paires et les paires de soutiens correspondantes sont disposées l'une à côté de l'autre dans la direction de la travée en étant pontées par l'élément profilé (7).

6. Dispositif selon l'une quelconque des revendications précédentes, **caractérisé en ce qu'**un moyen de soutien (10) de forme triangulaire ou trapézoïdale, en particulier une tôle de soutien, est disposé entre un soutien (6) ou une paire de soutiens et l'élément profilé (7).

7. Dispositif selon l'une quelconque des revendications précédentes, **caractérisé en ce qu'**un ou plusieurs soutien(s) (6) est/sont fixé(s) à une plaque de base (11), qui en position d'utilisation repose ou est maintenue au moins localement sur la structure portante (5) du toit (4).

8. Dispositif selon l'une quelconque des revendications précédentes, **caractérisé en ce qu'**un ou plusieurs soutien(s) (6) présente(nt) à son/leur extrémité opposée au module solaire (3) un montage adapté à la structure du toit (4).

9. Dispositif selon l'une quelconque des revendications précédentes, **caractérisé en ce qu'**il est prévu dans sa région au moins un dispositif de maintien et/ou de fixation.

10. Dispositif selon la revendication 9, **caractérisé en ce que** le dispositif de fixation est prévu sous forme de point de butée, par exemple sous forme d'oreille ou sous forme d'accrochage à travers la structure du dispositif.

11. Dispositif selon l'une quelconque des revendications précédentes, **caractérisé en ce que** l'inclinaison prévue de la face de toit du toit est inférieure ou égale à 5°.
